# EUROPÄISCHE PATENTSCHRIFT

(11) **EP 0 866 248 B1**
(45) Veröffentlichungstag und Bekanntmachung des Hinweises auf die Patenterteilung: **07.05.2003**
(21) Anmeldenummer: 98103673.4
(22) Anmeldetag: 03.03.1998
(51) Int. Cl.: F16J 15/32

(54) **Bürstendichtung mit in Umfangsrichtung schräg gestellten Borsten**
Brush seal with inclined bristles in the circumferential direction
Joint à brosses avec des soies inclinées en direction circonférentielle

(30) Priorität: 22.03.1997 DE 19712088
(43) Veröffentlichungstag der Anmeldung: 23.09.1998
(73) Patentinhaber: MTU Aero Engines GmbH, 80995 München (DE)
(72) Erfinder: Werner, Klemens, 80999 München (DE); Gail, Alfons, 86316 Friedberg (DE); Beichl, Stefan, 82211 Herrsching (DE)
(74) Vertreter: Einsele, Rolf W.

(56) Entgegenhaltungen:
- DE-A- 2 931 714
- DE-A- 4 403 605
- GB-A- 2 021 209
- US-A- 5 108 116

## Beschreibung

Die Erfindung betrifft eine Bürstendichtung zur Abdichtung eines Umfangspaltes zwischen zwei relativ zueinander drehbeweglichen Maschinenbauteilen mit einer Vielzahl von Borsten, die an einem ersten Bauteil ringförmig angebracht sind und die Borstenenden auf eine Dichtfläche des zweiten Bauteils ausgerichtet sind, wobei die Borsten zumindest abschnittsweise in deren Ringebene um den Winkel α₁ in Umfangsrichtung nachlaufend schräg gestellt sind. Eine solche Bürstendichtung ist in der EP 0 214 192 B1 offenbart.

Auch in den US-Patentschriften US 50 29 875 und US 54 74 306 sind Bürstendichtungen der eingangs genannten Bauart offenbart. In den genannten US-Patentschriften ist eine Schrägstellung der Borsten sowohl in Umfangsrichtung als auch bezüglich einer Ringebene offenbart.

Zur Verbesserung der Dichtwirkung wird bei der letztgenannten US-PS 54 74 306 gelehrt, die Borsten zwischen zwei voneinander beabstandeten ring- oder scheibenförmigen Flanken zu führen.

Bürstendichtungen der eingangs genannten Art kommen häufig bei Strömungsmaschinen, insbesondere Gasturbinentriebwerken zum Einsatz, um fluidisch unterschiedlich druckbeaufschlagte Räume an Umfangsspalten, z.B. zwischen einem Maschinengehäuse und dem Rotor oder einer Maschinenwelle mit möglichst geringer Leckage abzudichten. Dabei sollen z.B. aus Rotorunwuchten resultierende, exzentrische Rotor- oder Wellenpositionen gegenüber dem Gehäuse durch eine elastische und bewegliche Nachführung der Borsten ausgeglichen werden können. Hierin heben sich Bürstendichtungen gegenüber den bislang verwendeten steif bauenden Labyrinthdichtungen vorteilhaft ab, da diese sich nur in sehr eingeschränktem Maße an Wellenbewegungen anpassen können. Dort sind nämlich vorhersehbare Exzentrizitäten durch entsprechendes Vorhalten in der Spaltweite zu berücksichtigen. Des weiteren unterscheiden sich Bürstendichtungen von den Labyrinthdichtungen durch niedrigere Herstellkosten und geringeres Gewicht.

Die für Bürstendichtungen typische Nachgiebigkeit gegenüber exzentrische Bewegungen des Rotors resultiert aus der Schrägstellung ihrer Borsten gegenüber der Dichtfläche des Rotors bzw. den Rotorradialen. Je nach gewählter Borstenlänge und Schrägstellung der Borsten kann auf die erforderliche Nachgiebigkeit bzw. Elastizität der Bürstendichtung unabhängig von der Wahl des Werkstoffes Einfluß genommen werden. Wie aus der Patentanmeldung DE-196 41 375.3 bekannt, liegt der Winkel der Schrägstellung üblicherweise zwischen 30 und 60°, wobei ein Winkel von α = 45° ein Optimum zwischen Elastizität und Dichtigkeit darstellt.

Eine alternative Bauform einer Bürstendichtung ist in der Patentanmeldung DE-196 18 475.4 beschrieben. Neben einer möglichst geringen radialen Bauhöhe ist dort das Ziel, eine niedrige Steifigkeit der Borsten zu erzielen. Als Lösung wird dort vorgeschlagen, die Borsten über eine große Länge parallel zur Rotorachse auszurichten und lediglich die Borstenenden in Richtung auf die Dichtfläche des Rotors abzuwinkeln, so daß diese aus der Ebene der Bürstendichtung hervorragen.

Insbesondere bei der erstgenannten Bauform mit den schräg gestellten Borsten stellte sich eine Empfindlichkeit bezüglich der Drehrichtung des Rotors heraus, wobei bei Rückwärtsdrehung die dann gegen die Laufrichtung schräg gestellten Borsten mitgenommen und verbogen werden. Dies kann dann soweit führen, daß die Borsten plastisch deformiert werden und sich Lücken in der Bürstendichtung einstellen. Dies führt dann letztlich zu einer nachlassenden Dichtigkeit.

Hiervon ausgehend ist es Aufgabe der Erfindung, eine gattungsgemäße Bürstendichtung anzugeben, die zum einen den Vorteil nachgiebiger Borsten aufweist und zum anderen die Funktionstüchtigkeit unabhängig von der Drehrichtung des Rotors bewahrt.

Die gestellte Aufgabe wird erfindungsgemäß dadurch gelöst, daß die Borstenenden derart von den schräg gestellten Borstenabschnitten abgewinkelt sind, daß der Winkel α₂ der Borstenenden kleiner als der Winkel α₁ ist.

Die erfindungsgemäß ausgebildete Bürstendichtung hat den Vorteil, weitgehend unabhängig von der Drehrichtung des bewegten Bauteils eine elastische Nachgiebigkeit bezüglich radialer Bewegungen der Bauteile zu behalten. Die Unabhängigkeit hinsichtlich der Drehrichtung beruht darauf, daß der Schrägstellungswinkel α ₂ der Borstenenden gegenüber dem Schrägstellungswinkel α ₁ der Borsten in einem mittleren Abschnitt reduziert ist, so daß die Borstenenden senkrecht oder nahezu senkrecht bezüglich einer an die Dichtfläche des zweiten Bauteils angelegten Tangente ausgerichtet sind.

Anwendbar ist die erfindungsgemäße Bürstendichtung sowohl bei typischen Rotor-Stator-Anordnungen als auch bei Rotor-Systemen bei welchen eine Dichtung zwischen zwei konzentrischen Rotoren vorzusehen ist. Je nach dem ob stirnseitige oder am Umfang verlaufenden Dichtflächen abzudichten sind, können die Borsten der Bürstendichtung in axialer oder radialer Richtung ausgerichtet sein.

Bei Auslenkung der Borsten in eine axiale Richtung und abhängig von einem etwa konischen Verlauf der Dichtfläche kann der Winkel α ₂ so gewählt werden, daß die Borstenenden senkrecht oder nahezu senkrecht auf der Dichtfläche des zweiten Bauteiles ausgerichtet sind. Dies hat dann zur Wirkung, daß die Borstenenden bei Drehrichtung gegen den Schrägstellungswinkel α ₁, also bei einem vorlaufenden Drehsinn nicht mehr durch die Dichtfläche des zweiten Bauteils mitgenommen und abgeknickt oder plastisch deformiert werden. Vielmehr ist so ein elastisches Ausweichen der Borstenenden bei Berührung mit der Dichtfläche des zweiten Bauteils möglich. Hierbei ist zu berücksichtigen, daß die Dichtflächen nach einer gewissen Laufzeit durch Kontakt mit den Borsten aufgerauht werden und so die Borstenenden tendenziell leichter durch Unebenheiten auf der Dichtfläche zum Auslenken gebracht werden. Bei einem vorlaufenden Drehsinn würden dann auf der Oberfläche befindliche Vertiefungen die Borstenenden leichter mitnehmen können, so daß es zum Ausriß einzelner Borsten kommen könnte. Dies kann nun durch die erfindungsgemäße Ausbildung der Bürstendichtung unterbunden werden. Bei entsprechender Dimensionierung der Borstenlängen und des Schrägstellungswinkels α ₁ wird auch die den Bürstendichtungen typische Nachgiebigkeit in radialer Richtung beibehalten. Ein Anhalt für ein sinnvolles Längenverhältnis zwischen den schräggestellten Borstenabschnitten und den abgewinkelten Borstenenden ist in Anspruch 6 angegeben.

Weitere vorteilhafte Winkelbereiche und Längen der mittleren Borstenabschnitte und der Borstenenden ist in den Ansprüchen 2 bis 7 wiedergegeben.

In einer weiteren Ausführungsform gemäß den Merkmalen des Anspruches 7 sind die Borsten zwischen zwei i.d.R. axial voneinander beabstandeten, ring- oder scheibenförmigen Flanken bsw. eines Dichtungsgehäuses oder des benachbarten Bauteils geführt. Die Höhe der Flanken ist dabei derart ausgeführt, daß die Borsten zwischen den beiden Flanken hervorragen. Mit Blick auf das zweite Bauteil bilden die beiden Flanken jeweils einen zweiten Umfangsspalt mit dem zweiten Bauteil aus, der unter normalen Betriebsbedingungen größer ist als der durch die Borsten abzudichtende erste Umfangsspalt. Unter extremen Betriebsbedingungen kann es jedoch zu einer radialen Auslenkung des zweiten Bauteils derart kommen, daß lokal am Umfang der Bürstendichtung der zweite Umfangsspalt kleiner wird. Weiterhin können durch entsprechend weit zum zweiten Bauteil heruntergezogene Flanken die Borsten vor Verwirbelung durch das auftreffende Druckmedium geschützt werden. Ein weiterer unerwünschter Effekt wird durch die bis knapp zu den Borstenenden reichenden Flanken vermieden, wonach schräg gestellte Borsten in Umfangsrichtung ausgelenkt werden wenn sie aufgrund des Differenzdruckes über die Endkante der Flanke gebogen werden.

Was die Verwendung der erfindungsgemäßen Bürstendichtung in einer Strömungsmaschine anbelangt, so kommen die Stärken der Bürstendichtung, nämlich Dichtigkeit und Nachgiebigkeit gegenüber radialen Rotorbewegungen am besten zur Geltung, wenn die Bürstendichtung konzentrisch zwischen einem radial außen liegenden Stator und einem radial innen liegenden Rotor, bspw. einer Welle angeordnet wird. Bei einer drehfest mit dem Stator verbundenen Bürstendichtung nimmt dann die Packungsdichte nach radial innen also zur Dichtfläche des Rotors zu, so daß die Dichtigkeit im kritischsten Bereich nämlich im Spalt gegenüber der Dichtfläche am größten ist.

Eine bevorzugte Ausführungsform der Erfindung wird nachfolgend unter Bezugnahme auf die beigefügte Zeichnung erläutert. Es zeigt:
- Fig. 1: eine Ansicht einer Bürstendichtung mit radial ausgerichteten und in Umfangsrichtung abgewinkelten Borsten,
- Fig. 2: einen ausschnittsweisen Querschnitt einer Rotor-Stator-Anordnung mit einer Bürstendichtung,
- Fig. 3: eine ausschnittsweise Darstellung nur einer Borste der Bürstendichtung nach Fig. 2,
- Fig. 4a: einen ausschnittsweisen Längsschnitt der Rotor-Stator-Anordnung nach Fig. 2 im Bereich der Bürstendichtung,
- Fig. 4b: einen ausschnittsweisen Längsschnitt der Rotor-Stator-Anordnung nach Fig. 2 mit in axialer Richtung schräg gestellten Borsten.

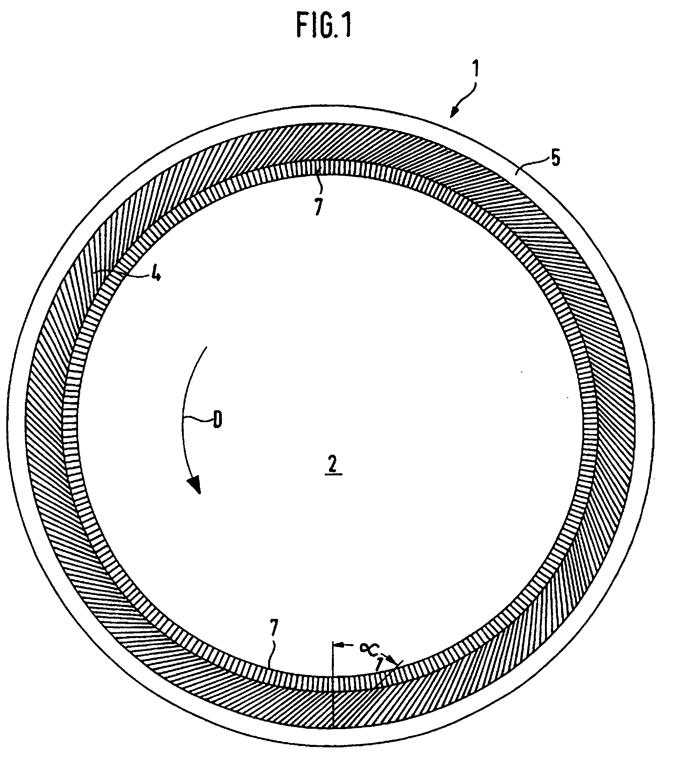

Die in Fig. 1 gezeigte Bürstendichtung 1 ist zur Abdichtung eines Umfangsspaltes S zwischen zwei drehbeweglichen Maschinenbauteilen 2, 3 vorgesehen. Im häufigsten Anwendungsfall handelt es sich bei dem zweiten Maschinenbauteil um einen Rotor, welcher im ersten Maschinenbauteil, nämlich in einem Stator drehbeweglich gelagert ist. Je nach Anforderungen an die Dichtigkeit und Nachgiebigkeit der Bürstendichtung 1 wird eine gewisse Packungsdichte von Borsten 4 vorgegeben, so daß die Bürstendichtung 1 eine Vielzahl von Borsten 4 aufweist, die möglichst gleichmäßig über den Ringumfang der Bürstendichtung verteilt sind. An ihrem statorseitigen Ende sind die Borsten 4 in einem Borstenhalter 5 festgelegt, welcher wiederum zur drehfesten Befestigung an einem in dieser Figur nicht weiter dargestellten Stator befestigt wird. Die Borsten 4 ragen aus einem radial innen ausgebildeten Umfangsschlitz 6 des Borstenhalters 5 in Richtung auf das Zentrum Z der Bürstendichtung hervor. Bei Vernachlässigung der Packungsdicke liegen die Borsten 4 in der Ringebene E der Bürstendichtung 1; hier in der Zeichenebene liegend.

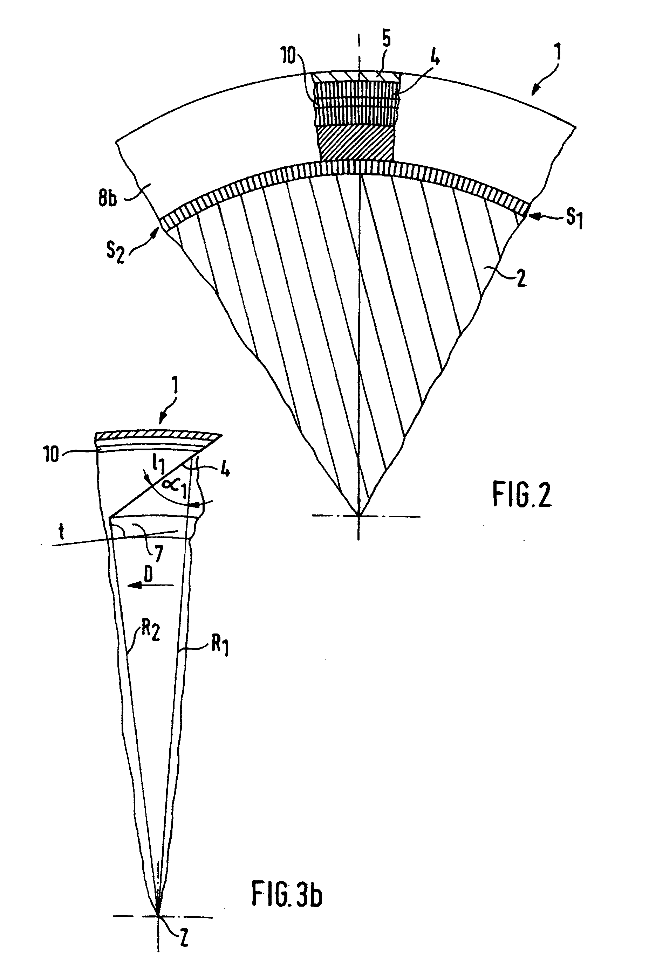

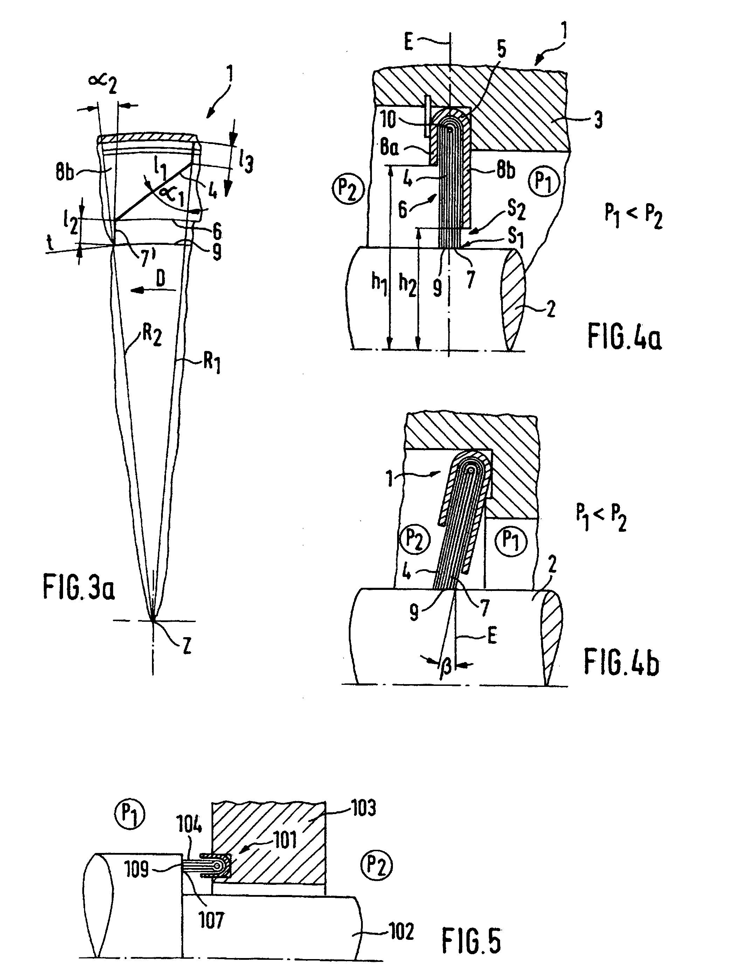

Um die Borsten 4 bei einer radialen Relativbewegung des Rotors gegenüber dem Stator nicht zu beschädigen, sind die Borsten 4 biegeelastisch ausgeführt. Eine radiale Ausweichbewegung der Borsten 4 wird ermöglicht indem die Borsten 4 in einem mittleren Abschnitt um den Winkel α ₁ in Umfangsrichtung schräg gestellt sind. In den Fig. 2 und 3 ist die Formgebung der Borsten sowie deren Orientierung in der Ringebene E deutlich zu erkennen.

Im Unterschied zu Fig. 1 ist in Fig. 2 ein sektorweiser Ausschnitt der Bürstendichtung 1 zwischen einem Rotor 2 und einem Stator 3 zu sehen, wobei die Borsten 4 auf der Rückseite der Bürstendichtung 1 von einer ringscheibenförmigen Flanke 8a bis auf einen zweiten Umfangsspalt S₂ abgedeckt. Der zweite Umfangsspalt S₂ ist in Fig. 2 zwischen der radial innen liegenden Endkante der Flanke 8a und dem Rotor 2 zu erkennen. Zur Darstellung der Winkelverhältnisse an den Borsten 4 ist in Fig. 3 beispielhaft eine einzelne Borste 4 dargestellt. Die Borste 4 ist in einem radial äußeren Abschnitt radial fluchtend ausgerichtet und dort im geschnitten dargestellten Borstenhalter 5 festgelegt. Die Art der Festlegung der Borsten 4 wird nachfolgend anhand der Figuren 4a und 4b beschrieben. Die Länge des radial äußeren Borstenabschnittes wird mit l₃ definiert. Im Anschluß daran sind die Borsten in einem mittleren Abschnitt der Länge l₁ um den Winkel α ₁=45° gegenüber einer Bezugsradialen R₁ abgewinkelt. Die Bezugsradiale R₁ ist vom Zentrum Z der Bürstendichtung bis zum Schnittpunkt des radial außen liegenden Borstenabschnitts mit dem schräggestellten mittleren Borstenabschnitt zu ziehen. Bei Ausführungen mit ebenfalls schräg gestellten radial äußeren Borstenabschnitt wäre die Bezugsradiale in das radial äußere Ende der Borste 4 zu legen.

Schließlich ist ein radial innerer Borstenabschnitt erneut ggü. dem mittleren Borstenverlauf abgewinkelt, so daß die Borstenenden 7 möglichst senkrecht auf eine auf die Dichtfläche 9 des Rotors 2 angelegte Tangente t gerichtet sind. Gemäß der Darstellung in Fig. 3 ist das Borstenende 7 mit der Länge l₂ um den Winkel α ₂ = 5° gegenüber einer Bezugsradialen R₂ schräg gestellt. Die Bezugsradiale R₂ ist in diesem Fall durch das Zentrum Z und durch das Borstenende 7 zu legen. Im Idealfall ist davon auszugehen, daß das Zentrum Z der Bürstendichtung 1 mit dem Rotorzentrum zusammenfällt. Weichen den Zentren aufgrund von Betriebs- und Einbaubedingungen voneinander ab so wird der radiale Versatz durch die elastische Nachgiebigkeit der Borsten 4 ausgeglichen.

Zu den Längenverhältnissen ist anzumerken, daß die Länge l₁ des mittleren Borstenabschnittes etwa 65% der gesamten Borstenlänge l_{G} = l₁ + l₂ + l₃ ausmacht. Die Schrägstellungswinkel α ₁ und α ₂ sind bezüglich der Drehrichtung D des Rotors 2 gegenüber dem Stator 3 nachlaufend ausgeführt, d.h. für diese Anordnung, daß die Borstenabschnitte in Drehrichtung D von ihrem Bezugsradialen R₁, R₂ abgewinkelt sind. Bei Maschinenbauteilen, die beide drehbeweglich ausgeführt sind, wäre als Drehrichtung D eine relative Komponente der einzelnen Drehvektoren zu ermitteln. Auch hier wäre dann der mittlere Borstenabschnitt nachlaufend gegenüber einem Relativvektor abzuwinkeln.

Fig. 3b zeigt ein Anwendungsbeispiel, bei welchem die Borsten 4 bis in den Borstenhalter 5 hin schräg verlaufend unter dem Winkel α ₁ ggü. Einer Bezugsradialen R₁ ausgeführt sind. Ein weiterer Unterschied ist in dem Borstenende 7 zu erkennen, welches hier senkrecht zur Tangente t ausgerichtet ist. Entsprechend ist der Winkel α ₂ = 0°.

In den Fig. 4a und 4b ist die Einfassung der Borsten 4 im Borstenhalter 5 zu erkennen. Hierzu sind die Borsten 4 U-förmig in Schlaufen um einen konzentrischen Kernring 10 gewickelt. Der im Querschnitt U-förmige Borstenhalter 5 weist zwei axial voneinander beabstandete Flanken 8a, 8b auf, die unterschiedliche radiale Höhen h₁, h₂ aufweisen. Im Axialspalt zwischen den beiden Flanken 8a, 8b erstrecken sich die Borsten 4 parallel zur Ringebene E, die hier durch den Kernring 10 verlaufend dargestellt ist. Die Borsten 4 ragen aus dem Umfangsschlitz 6 zwischen den beiden Flanken 8a, 8b heraus und dichten so den Umfangsspalt S₂ ab.

Mit Blick auf die Fig. 3a und 4a erkennbar, ragen die Borstenenden 7 aus dem Umfangsschlitz 6 hervor und liegen somit in einem Spaltbereich S₁, den die höhere Flanke 8b mit dem Rotor 2 ausbildet. Dies hat zur Folge, daß der mittlere Abschnitt mit den schräg gestellten Borsten hochdruckseitig vollständig von der Flanke 8b abgedeckt wird, während das auf der Niederdruckseite nur zum Teil durch die Flanke 8a geschieht.
Eine weitere Ausführungsform ist in Fig. 4b gezeigt, bei welcher die Borsten 4 bezogen auf die Ringebene E der Bürstendichtung 1 in einem spitzen Winkel β gleich 15° axial ausgelenkt sind. Die Bürstendichtung 1 weist somit eine leicht konische Formgebung auf, so daß die Borsten 4 in einer konischen Fläche liegen. Diese Ausrichtung der Borsten 4 zur Hochdruckseite P₁ hat zur Folge, daß aufgrund des Druckunterschiedes die Borstenenden 7 leicht gegen die Dichtfläche 9 des Rotors 2 angedrückt werden, was die Leckage verringert.

Ein weiteres Anwendungsbeispiel ist in Fig. 5 dargestellt. Auch hier dichtet die im Stator 103 angebrachte Bürstendichtung 101 einen Spalt zwischen Stator 103 und Rotor 102 ab. Die ebenfalls ringförmig ausgebildete Bürstendichtung 101 weist eine Vielzahl vorwiegend in axialer Richtung ausgerichteter Borsten 104 auf, wobei hier eine an einer Stirnseite des Rotors 102 befindliche Dichtfläche 109 in Wirkung mit den Borsten 104 steht. Auch hier sind die Borstenenden 107 vom schräg gestellten Borstenabschnitt derart abgewinkelt, daß die Borstenenden 107 im wesentlichen senkrecht auf die Dichtfläche 109 ausgerichtet sind. Durch die Schrägstellung des mittleren Borstenabschnittes wird ein Ausgleich axialer Relativbewegung zwischen dem Rotor 102 und 103 ermöglicht.

### Bezugszeichenliste

- 1, 101: Bürstendichtung
- 2, 102: erste Maschinenbauteil, Rotor
- 3, 103: zweite Maschinenbauteil, Stator
- 4, 104: Borsten
- 5: Borstenhalter
- 6: Umfangsschlitz
- 7, 107: Borstenenden
- 8a, 8b: Flanke
- 9, 109: Dichtfläche
- 10: Kernring

- d: Packungsdicke
- D: Drehrichtung
- E: Ringebene
- h₁, h₂: Höhe
- l₁, l₂, l₃: Länge des Borstenabschnitts
- l_{G}: Borstenlänge
- R₁, R₂: Bezugsradiale
- S₁, S₂: erster, zweiter Umfangsspalt
- t: Tangente
- U: Umfangsrichtung
- Z: Zentrum

## Patentansprüche

1. Bürstendichtung (1,101) zur Abdichtung eines Umfangspaltes (S1) zwischen zwei relativ zueinander drehbeweglichen Maschinenbauteilen (2,102; 3,103) mit einer Vielzahl von Borsten (4, 104), die an einem ersten Bauteil (3,103) ringförmig angebracht sind und die Borstenenden (7,107) auf eine Dichtfläche (9,109) des zweiten Bauteils (2,102) ausgerichtet sind, wobei die Borsten (4,104) zumindest abschnittsweise in der Ringebene (E) um den Winkel (α₁) in Umfangsrichtung nachlaufend schräg gestellt sind, **dadurch gekennzeichnet, daß** die Borstenenden (7,107) derart von den schräg gestellten Borstenabschnitten abgewinkelt sind, daß der Winkel (α₂) der Borstenenden (7,107) kleiner als der Winkel (α₁) ist.

2. Bürstendichtung (1,101) nach Anspruch 1, **dadurch gekennzeichnet, daß** der Winkel (α₂) der Borstenenden (7,107) zwischen 0 und 15° beträgt.

3. Bürstendichtung (1,101) nach Anspruch 1, **dadurch gekennzeichnet, daß** der Winkel (α₂) der Borstenenden (7,107) zwischen 0 und 5° beträgt.

4. Bürstendichtung (1,101) nach einem der vorhergehenden Ansprüche, **dadurch gekennzeichnet, daß** der Winkel (α₁) der schräg gestellten Borstenabschnitte zwischen 30 und 60° beträgt.

5. Bürstendichtung (1,101) nach einem der vorhergehenden Ansprüche, **dadurch gekennzeichnet, daß** die Borsten (4,) bezogen auf die Ringebene (E) der Bürstendichtung (1,101) in einem spitzen Winkel (β) axial ausgelenkt sind.

6. Bürstendichtung (1,101) nach einem der vorhergehenden Ansprüche, **dadurch gekennzeichnet, daß** das Verhältnis l₁ / l₂ der Länge (l₁) des schräg gestellten Borstenabschnitts zu der Länge (l₂) der Borstenenden (7,107) zwischen etwa 1 und 6 liegt.

7. Bürstendichtung (1,101) nach einem der vorhergehenden Ansprüche, **dadurch gekennzeichnet, daß** die Länge (l₁) des schräg gestellten Borstenabschnitts mindestens 50% der gesamten Borstenlänge (l_{G}) beträgt.

8. Bürstendichtung (1,101) nach einem der vorhergehenden Ansprüche, **dadurch gekennzeichnet, daß** die Borsten (4) zwischen zwei voneinander beabstandeten, ring- oder scheibenförmigen Flanken (8a,8b) geführt sind, wobei der Abschnitt der schräg gestellten Borsten (4) radial innerhalb des Spalts zwischen den beiden Flanken (8a,8b) liegt und die Borstenenden (7) zwischen den Flanken (8a,8b) hervorragen.

9. Bürstendichtung (1,101) nach Anspruch 8, **dadurch gekennzeichnet, daß** die Flanken (8a, 8b) unterschiedliche radiale Bauhöhen aufweisen und der Abschnitt der schräg gestellten Borsten (4) innerhalb der höheren Flanke liegt.

10. Bürstendichtung (1,101) nach einem der vorhergehenden Ansprüche, **dadurch gekennzeichnet, daß** die Borsten (4) in einem Borstenhalter (5) festgelegt sind, wobei die Borsten (4) im innerhalb des Borstenhalters (5) liegenden Abschnitt im wesentlichen parallel zu den Radialen (R₁, R₂) verlaufen.

11. Bürstendichtung (1,101) nach einem der vorhergehenden Ansprüche, **dadurch gekennzeichnet, daß** die Borsten (4,104) mit einer Beschichtung zur Reduzierung der Reibung auf der Dichtfläche (9,109) des zweiten Bauteils (2,102) versehen sind.

12. Anwendung einer Bürstendichtung (1,101) nach einem der vorhergehenden Ansprüche für die Abdichtung des Rotors (2,102) einer Strömungsmaschine, **dadurch gekennzeichnet, daß** die Borstenenden (7,107) auf eine den Rotor umgebende Dichtfläche (9,109) ausgerichtet sind.

## Claims

1. A brush seal (1, 101) for sealing a circumferential gap (S1) between two machine components (2, 102; 3, 103) which are able to rotate in relation to one another with a multiplicity of bristles (4, 104) which are fitted in a ring shape to a first component (3, 103) and the ends of which are oriented towards a sealing surface (9, 109) on the second machine component (2, 102), at least sections of these bristles (4, 104) being inclined at an angle (α₁) in the ring plane (E) so that they trail in relation to the circumference,
**characterised in that**
the ends (7, 107) of the bristles are angled away from the inclined bristle sections in such a manner that the angle (α₂) of the bristle ends (7, 107) is smaller than the angle (α₁).

2. A brush seal (1, 101) in accordance with claim 1,
**characterised in that**
the angle (α₂) of the bristle ends (7, 107) lies between 0° and 15°.

3. A brush seal (1, 101) in accordance with claim 1,
**characterised in that**
the angle (α₂) of the bristle ends (7, 107) lies between 0° and 5°.

4. A brush seal (1, 101) in accordance with one of the preceding claims,
**characterised in that**
the angle (α₁) of the inclined bristle sections lies between 30° and 60°.

5. A brush seal (1, 101) in accordance with one of the preceding claims,
**characterised in that**
the bristles (4) are oriented axially at an acute angle (β) in relation to the ring plane (E) of the brush seal (1, 101).

6. A brush seal (1, 101) in accordance with one of the preceding claims,
**characterised in that**
the ratio (l₁ / l₂) of the length (l₁) of the inclined bristle section to the length (l₂) of the bristle ends (7, 107) lies between approximately 1 and 6.

7. A brush seal (1, 101) in accordance with one of the preceding claims,
**characterised in that**
the length (l₁) of the inclined bristle section is at least 50% of the total bristle length (l_{G}).

8. A brush seal (1, 101) in accordance with one of the preceding claims,
**characterised in that**
the bristles (4) are guided between two ring- or disk-shaped flanks (8a, 8b) positioned a certain distance apart, the section of the inclined bristles (4) lying radially inside the gap between the two flanks (8a, 8b) and the bristle ends (7) projecting between the flanks (8a, 8b).

9. A brush seal (1, 101) in accordance with claim 8,
**characterised in that**
the flanks (8a, 8b) have different radial heights and the section of the inclined bristle lies inside the higher flank.

10. A brush seal (1, 101) in accordance with one of the preceding claims,
**characterised in that**
the bristles (4) are fixed in a bristle holder (5), the bristles (4) in the section lying inside the bristle holder (5) running essentially parallel to the radials (R₁, R₂).

11. A brush seal (1, 101) in accordance with one of the preceding claims,
**characterised in that**
the bristles (4, 104) are provided with a coating to reduce the friction on the sealing surface (9, 109) of the second component (2, 102).

12. An application of a brush seal (1, 101) in accordance with one of the preceding claims for sealing the rotor (2, 102) of a turbo engine,
**characterised in that**
the bristle ends (7, 107) are oriented towards a sealing surface (9, 109) which surrounds the rotor.

## Revendications

1. Joint à brosse (1, 101) pour rendre étanche une fente circonférentielle (S1) entre deux composants de machine (2, 102 ; 3, 103) en rotation l'un par rapport à l'autre, avec une multitude de soies (4, 104), qui sont appliquées sur un premier composant (3, 103) en forme d'anneau, tandis que les extrémités des soies (7, 107) sont alignées sur une surface étanche (9, 109) du deuxième composant (2, 102), moyennant quoi les soies (4, 104) sont posées obliquement les unes après les autres en direction périphérique à l'angle (α₁) dans le plan de l'anneau (E), au moins segment par segment, **caractérisés en ce que** les extrémités des soies (7, 107) sont pliées à partir des segments des soies obliques de telle sorte que l'angle (α₂) des extrémités des soies (7, 107) est plus petit que l'angle (α₁).

2. Joint à brosse (1, 101) selon la revendication 1, **caractérisé en ce que** l'angle (α₂) des extrémités des soies (7, 107) est de 0° à 15°.

3. Joint à brosse (1, 101) selon la revendication 1, **caractérisé en ce que** l'angle (α₂) des extrémités des soies (7, 107) est de 0° à 5°.

4. Joint à brosse (1, 101) selon l'une quelconque des revendications précédentes, **caractérisé en ce que** l'angle (α₁) des segments de soies obliques est de 30° à 60°.

5. Joint à brosse (1, 101) selon l'une quelconque des revendications précédentes, **caractérisé en ce que** les soies (4) montées sur le plan de l'anneau (E) du joint à brosse (1, 101) sont sorties en direction axiale avec un angle aigu (β).

6. Joint à brosse (1, 101) selon l'une quelconque des revendications précédentes, **caractérisé en ce que** le rapport l₁/l₂ de la longueur (l₁) du segment de soies oblique par rapport à la longueur (12) des extrémités des soies (7, 107) est placé approximativement entre 1 et 6.

7. Joint à brosse (1, 101) selon l'une quelconque des revendications précédentes, **caractérisé en ce que** la longueur (l₁) du segment de soies oblique représente au moins 50% de la longueur totale des soies (lₒ).

8. Joint à brosse (1, 101) selon l'une quelconque des revendications précédentes, **caractérisé en ce que** les soies (4) sont conduites entre deux flancs (8a, 8b) mutuellement distants et ayant la forme d'anneau ou de disque, moyennant quoi le segment des soies oblique (4) est posé en direction radiale à l'intérieur de la fente entre les deux flancs (8a, 8b) et que les extrémités des soies (7) saillissent entre les flancs (8a, 8b).

9. Joint à brosse (1, 101) selon la revendication 8, **caractérisé en ce que** les flancs (8a, 8b) comportent des hauteurs d'installation radiale différentes et que le segment de soies oblique (4) est posé à l'intérieur du flanc le plus haut.

10. Joint à brosse (1, 101) selon l'une quelconque des revendications précédentes, **caractérisé en ce que** les soies (4) sont fixées dans un manche à soies (5), moyennant quoi les soies (4) du segment posé à l'intérieur du manche à soies (5) courent pratiquement parallèlement aux directions radiales (R₁, R₂).

11. Joint à brosse (1, 101) selon l'une quelconque des revendications précédentes, **caractérisé en ce que** les soies (4, 104) sont prévues avec une couche pour réduire la friction contre la surface étanche (9, 109) du deuxième composant (2, 102).

12. Application d'un joint à brosse selon l'une quelconque des revendications précédentes pour rendre étanche le rotor (2, 102) d'une turbomachine,
**caractérisée en ce que** les extrémités des soies (7, 107) sont alignées sur une des surfaces étanches (9, 109) entourant le rotor.
